(19) Europäisches Patentamt
European Patent Office
Office européen des brevets

(11) **EP 3 689 455 A1**

(12) **EUROPEAN PATENT APPLICATION**
published in accordance with Art. 153(4) EPC

(43) Date of publication:
05.08.2020 Bulletin 2020/32

(51) Int Cl.:
**B01J 23/63** (2006.01)      **B01D 53/94** (2006.01)
**B01J 35/04** (2006.01)      **F01N 3/10** (2006.01)
**F01N 3/28** (2006.01)

(21) Application number: 18860742.8

(22) Date of filing: 27.09.2018

(86) International application number:
PCT/JP2018/035837

(87) International publication number:
WO 2019/065799 (04.04.2019 Gazette 2019/14)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.09.2017 JP 2017186473

(71) Applicants:
• Ibiden Co., Ltd.
Ogaki-shi
Gifu 503-8604 (JP)
• TOYOTA JIDOSHA KABUSHIKI KAISHA
Toyota-shi, Aichi, 471-8571 (JP)

(72) Inventors:
• GOTO, Shinnosuke
Ibi-gun
Gifu 501-0695 (JP)
• YOSHIDA, Takeru
Toyota-shi
Aichi 471-8571 (JP)
• TOJO, Takumi
Toyota-shi
Aichi 471-8571 (JP)
• SUZUKI, Hiromasa
Toyota-shi
Aichi 471-8571 (JP)

(74) Representative: Hoefer & Partner Patentanwälte
mbB
Pilgersheimer Straße 20
81543 München (DE)

(54) **HONEYCOMB CATALYST**

(57)    The present invention relates to a honeycomb catalytic converter including: a honeycomb structured body including in which multiple through-holes are arranged longitudinally in parallel with one another with a partition wall therebetween; and a noble metal supported on the honeycomb structured body, wherein the honeycomb structured body contains a ceria-zirconia complex oxide and alumina, each partition wall includes a first carrier layer defining a surface layer of the partition wall and carrying Rh, and a second carrier layer located more inwardly of the partition wall than the first carrier layer and carrying Pd, and the Pd concentration on the first carrier layer side of each second carrier layer is higher than the Pd concentration in the center of the second carrier layer.

FIG.2

**Description**

TECHNICAL FIELD

The present invention relates to a honeycomb catalytic converter.

BACKGROUND ART

Exhaust gas discharged from internal combustion engines of automobiles and the like contains harmful gases such as carbon monoxide (CO), nitrogen oxides (NOx), and hydrocarbons (HC). An exhaust gas catalytic converter that decomposes such harmful gases is also referred to as a three-way catalytic converter. An exhaust gas catalytic converter that decomposes such harmful gases is also referred to as a three-way catalytic converter. A common three-way catalytic converter includes a catalyst layer that is formed by wash-coating the slurry containing noble metal particles having catalytic activity on a honeycomb monolithic substrate made of cordierite or the like.

Patent Literature 1 discloses an exhaust gas catalytic converter including a Pd-carrying porous substrate and a Rh-carrying coat layer made of a ceria-zirconia solid solution on the porous substrate.

CITATION LIST

- Patent Literature

Patent Literature 1: JP 2017-39069 A

SUMMARY OF INVENTION

- Technical Problem

Yet, there is a demand for a honeycomb catalytic converter that exhibits higher exhaust gas conversion performance than the exhaust gas catalytic converter disclosed in Patent Literature 1.

The present inventors conducted extensive studies on the exhaust gas catalytic converter disclosed in Patent Literature 1. As a result, the present inventors presumed that since the surface of the porous substrate is covered by the coat layer made of a ceria-zirconia solid solution having an oxygen storage capacity (OSC), oxygen is not sufficiently supplied to the deep inside of the porous substrate due to the coat layer.

Specifically, the present inventors presumed that in the exhaust gas catalytic converter disclosed in Patent Literature 1, since a first catalyst (Pd) is supported inside the porous substrate, Pd impregnated inside the porous substrate fails to exhibit exhaust gas conversion performance. In other words, in the exhaust gas catalytic converter disclosed in Patent Literature 1, the part that actually contributes to conversion of exhaust gas is a part near the coat layer, and a large portion of noble metal catalysts supported fails to contribute to conversion of exhaust gas.

The present invention was made to solve the above problem. An object of the present invention is to provide a honeycomb catalytic converter capable of achieving higher exhaust gas conversion performance.

- Solution to Problem

Specifically, the present invention provides a honeycomb catalytic converter including: a honeycomb structured body in which multiple through-holes are arranged longitudinally in parallel with one another with a partition wall therebetween; and a noble metal supported on the honeycomb structured body, wherein the honeycomb structured body contains a ceria-zirconia complex oxide and alumina, each partition wall includes a first carrier layer defining a surface layer of the partition wall and carrying Rh, and a second carrier layer located more inwardly of the partition wall than the first carrier layer and carrying Pd, and the Pd concentration on the first carrier layer side of each second carrier layer is higher than the Pd concentration in the center of the second carrier layer.

In the honeycomb catalytic converter of the present invention, a Pd-carrying region in the second carrier layer is concentrated on the first carrier layer side. Thus, Pd can sufficiently exhibit its catalytic activity even when exhaust gas and oxygen do not reach the center of the second carrier layer, thus achieving higher exhaust gas conversion performance.

In addition, since Pd particles and Rh particles are not adjacently located, Pd and Rh are prevented from forming an alloy, which can prevent a decrease in catalytic effect.

Herein, that "the Pd concentration on the first carrier layer side of each second carrier layer is higher than the Pd concentration in the center of the second carrier layer" can be confirmed by element mapping of a cross section of the partition walls cut in a direction perpendicular to a longitudinal direction of the honeycomb catalytic converter by an electron probe micro analyzer (also referred to as "EPMA") or the like.

Specifically, first, a combination of a 10 $\mu$m $\times$ 10 $\mu$m region in the center (a central portion in the thickness direction) of a second carrier layer and a 10 $\mu$m $\times$ 10 $\mu$m region on a surface of the second carrier layer located on the first carrier layer side away from the center is selected from second carrier layer portions in an element mapping image of the partition walls. Ten such combinations are randomly selected. Subsequently, in each combination of the regions, the Pd concentration is compared between the 10 $\mu$m $\times$ 10 $\mu$m region in the center of the second carrier layer and the 10 $\mu$m $\times$ 10 $\mu$m region on the surface of the second carrier layer. When the Pd concentration in the 10 $\mu$m $\times$ 10 $\mu$m region on the surface of the second carrier layer is higher than the Pd concentration in the 10 $\mu$m $\times$ 10 $\mu$m region in the center of the second carrier layer in all the combinations, the Pd concentration on the first carrier layer side of the second carrier layer is determined to be higher than the Pd concentration in the center of the second carrier layer.

In the honeycomb catalytic converter of the present invention, preferably, the honeycomb structured body further contains an inorganic binder.

When the honeycomb structured body further contains an inorganic binder, the mechanical strength of the honeycomb structured body can be increased.

In the honeycomb catalytic converter of the present invention, preferably, the first carrier layer is a coat layer containing a ceria-zirconia complex oxide, alumina, and Rh, and the second carrier layer is an extrudate containing ceria-zirconia complex oxide particles and alumina particles.

A honeycomb catalytic converter can be easily produced by supporting a large amount of Pd on a surface (which later defines the first carrier layer side) of the extrudate containing ceria-zirconia complex oxide particles and alumina particles, and forming a coat layer containing a ceria-zirconia complex oxide, alumina, and Rh on the surface of the extrudate.

In the honeycomb catalytic converter of the present invention, preferably, each partition wall has a thickness of 0.10 to 0.25 mm.

When each partition wall has a thickness in the above range, the mechanical strength and the exhaust gas conversion performance of the honeycomb catalytic converter can be easily achieved in a balanced manner.

In the honeycomb catalytic converter of the present invention, preferably, the second carrier layer of each partition wall has a thickness of 0.05 to 0.20 mm.

When the second carrier layers each have a thickness in the above range, the second carrier layers can be entirely used for conversion of exhaust gas while the strength is maintained at a high level.

Preferably, the honeycomb catalytic converter of the present invention has a length to diameter ratio (length/diameter) of 0.5 to 1.1.

The honeycomb catalytic converter having a shape with a length to diameter ratio in the above range can easily achieve the required exhaust gas conversion performance while the pressure loss in the honeycomb catalytic converter is kept low.

In the honeycomb catalytic converter of the present invention, preferably, the honeycomb catalytic converter has a diameter of 130 mm or less.

The honeycomb catalytic converter having a diameter of 130 mm or less can be made less susceptible to breakage from thermal shock.

Preferably, the honeycomb catalytic converter of the present invention contains 25 to 75 wt% ceria-zirconia complex oxide.

When the proportion of ceria-zirconia complex oxide is in the above range, the honeycomb catalytic converter can have a higher OSC.

BRIEF DESCRIPTION OF DRAWINGS

FIG. 1 is a schematic perspective view of an example of a honeycomb catalytic converter of the present invention.
FIG. 2 is a schematic cross-sectional view of an example of partition walls constituting the honeycomb catalytic converter of the present invention.
FIG. 3 is an EPMA image of second carrier layers constituting a honeycomb catalytic converter according to Example 1.
FIG. 4 is an EPMA image of second carrier layers constituting a honeycomb catalytic converter according to Comparative Example 1.

DESCRIPTION OF EMBODIMENTS

[Honeycomb catalytic converter]

First, the honeycomb catalytic converter of the present invention is described.

The honeycomb catalytic converter of the present invention includes a honeycomb structured body in which multiple through-holes are arranged longitudinally in parallel with one another with a partition wall therebetween, and a noble metal supported on the honeycomb structured body.

In the honeycomb catalytic converter of the present invention, the honeycomb structured body contains a ceria-zirconia complex oxide (hereinafter also referred to as "CZ ") and alumina.

Whether or not the honeycomb catalytic converter of the present invention contains the above components can be confirmed by X-ray diffraction (XRD).

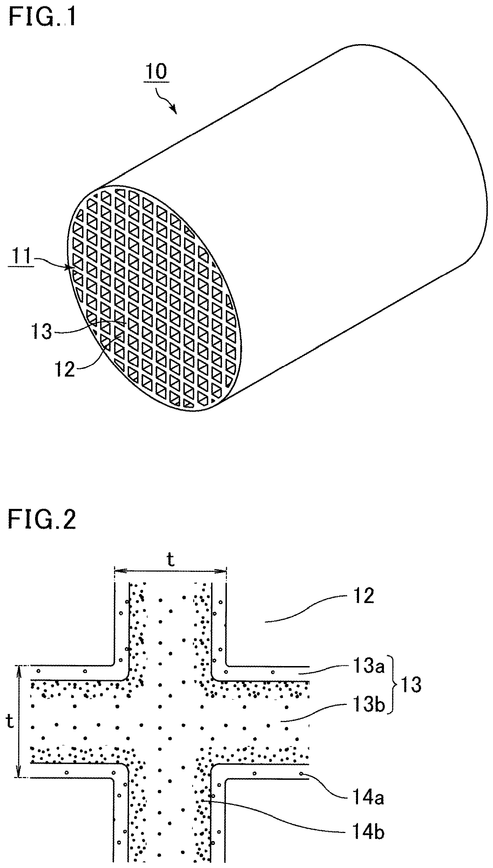

FIG. 1 is a schematic perspective view of an example of the honeycomb catalytic converter of the present invention.

A honeycomb catalytic converter 10 shown in FIG. 1 includes a single honeycomb structured body 11 in which multiple through-holes 12 are arranged longitudinally in parallel with one another with a partition wall 13 therebetween.

The honeycomb structured body 11 contains CZ and alumina, and carries a noble metal.

In the honeycomb catalytic converter of the present invention, each partition wall includes a first carrier layer defining a surface layer of each partition wall and carrying rhodium (Rh) and a second carrier layer located more inwardly of the partition wall than the first carrier layer and carrying palladium (Pd), and the Pd concentration on the first carrier layer side of each second carrier layer is higher than the Pd concentration in the center of the second carrier layer (i.e., the Pd-carrying region in the second carrier layer is concentrated on the first carrier layer side).

In the honeycomb catalytic converter of the present invention, since the Pd-carrying region in the second carrier layer is concentrated on the first carrier layer side, Pd can sufficiently exhibit its catalytic activity even when exhaust gas does not reach the deep portion of the second carrier layer, thus achieving higher exhaust gas conversion performance.

FIG. 2 is a schematic cross-sectional view of an example of the partition walls constituting the honeycomb catalytic converter of the present invention.

As shown in FIG. 2, each partition wall 13 includes a first carrier layer 13a defining a surface layer (on the through-hole 12 side of the partition wall 13), and a second carrier layer 13b located more inwardly of the partition wall 13 than the first carrier layer 13a in a thickness direction of the partition wall 13 (direction indicated by a double-headed arrow t in FIG. 2).

Each first carrier layer 13a carries rhodium 14a which is a noble metal, and each second carrier layer 13b carries palladium 14b which is a noble metal. Further, in each second carrier layer 13b, the palladium 14b is supported in a concentrated manner on the first carrier layer 13a side, and the Pd concentration on the first carrier layer side of the second carrier layer 13b is higher than the Pd concentration in the center of the second carrier layer 13b.

Herein, that "the Pd concentration on the first carrier layer side of each second carrier layer is higher than the Pd concentration in the center of the second carrier layer" can be confirmed by element mapping of a cross section of the partition walls cut in a direction perpendicular to a longitudinal direction of the honeycomb catalytic converter by an EPMA or the like.

Specifically, first, a combination of a 10 $\mu$m $\times$ 10 $\mu$m region in the center (a central portion in the thickness direction) of a second carrier layer and a 10 $\mu$m $\times$ 10 $\mu$m region on a surface of the second carrier layer located on the first carrier layer side away from the center is selected from second carrier layer portions in an element mapping image of the partition walls. Ten such combinations are randomly selected. Subsequently, in each combination of the regions, the Pd concentration is compared between the 10 $\mu$m $\times$ 10 $\mu$m region in the center of the second carrier layer and the 10 $\mu$m $\times$ 10 $\mu$m region on the surface of the second carrier layer. When the Pd concentration of the element in the 10 $\mu$m $\times$ 10 $\mu$m region on the surface of the second carrier layer is higher than the Pd concentration in the 10 $\mu$m $\times$ 10 $\mu$m region in the center of the second carrier layer in all the combinations, the Pd concentration on the surface on the first carrier layer side of the second carrier layer is determined to be higher than the Pd concentration in the center of the second carrier layer. The concentration of the noble metal can be determined from the hue and shade of the element mapping image.

The honeycomb structured body defining the honeycomb catalytic converter of the present invention may include a single honeycomb fired body or multiple honeycomb fired bodies, and the multiple honeycomb fired bodies may be combined together with an adhesive layer.

The honeycomb fired body is produced by extrusion-molding a raw material paste containing ceria-zirconia composite oxide particles (hereinafter also referred to as "CZ particles") and alumina particles, and firing the resulting extrudate.

In the honeycomb catalytic converter of the present invention, preferably, the second carrier layer is formed by supporting Pd on the honeycomb fired body obtained by firing an extrudate containing ceria-zirconia composite oxide particles and alumina particles.

A coat layer may be formed as a surface layer of each partition wall constituting the honeycomb fired body.

The first carrier layer can be formed by forming a coat layer containing Rh.

Preferably, the first carrier layer is a coat layer containing a ceria-zirconia composite oxide, alumina, and Rh.

In order to increase thermal shock resistance, preferably, CZ particles contained in the honeycomb catalytic converter of the present invention have an average particle size of 1 to 50 $\mu$m. The average particle size of the CZ particles is more preferably 1 to 30 $\mu$m.

When the CZ particles have an average particle size of 1 to 50 $\mu$m, the resulting honeycomb catalytic converter has a larger surface area, thus achieving a higher OSC.

The alumina particles contained in the honeycomb catalytic converter of the present invention may have any average particle size. Yet, in order to increase exhaust gas conversion performance, the average particle size is preferably 1 to 10 $\mu$m, more preferably 1 to 5 $\mu$m.

The average particle sizes of the CZ particles and alumina particles contained in the honeycomb catalytic converter can be determined by taking a scanning electron microscope (SEM) image of the honeycomb catalytic converter with a SEM (S-4800 available from Hitachi High-Technologies Corporation).

Preferably, the honeycomb catalytic converter of the present invention contains 25 to 75 wt% ceria-zirconia complex oxide.

When the proportion of the ceria-zirconia complex oxide is in the above range, the honeycomb catalytic converter can achieve a higher OSC.

Preferably, the honeycomb catalytic converter of the present invention contains 15 to 35 wt% alumina particles.

In the honeycomb catalytic converter of the present invention, ceria in the ceria-zirconia complex oxide of the CZ particles has an OSC. The ceria-zirconia complex oxide preferably forms a solid solution of ceria and zirconia.

In the honeycomb catalytic converter of the present invention, the amount of ceria in the ceria-zirconia complex oxide is preferably 30 wt% or more, more preferably 40 wt% or more, and preferably 90 wt% or less, more preferably 80 wt% or less. The amount of zirconia in the ceria-zirconia complex oxide is preferably 60 wt% or less, more preferably 50 wt% or less. Such a ceria-zirconia complex oxide has a high ceria content and thus has a high OSC.

In the honeycomb catalytic converter of the present invention, the alumina particles may be of any type, but $\theta$-phase alumina particles (hereinafter also referred to as "$\theta$-alumina particles") are preferred.

Use of $\theta$-phase alumina particles as dividers for the ceria-zirconia complex oxide can inhibit sintering of alumina particles to one another by heat during use, allowing for sustained catalytic function. Further, use of $\theta$-phase alumina particles can increase heat resistance.

The honeycomb catalytic converter of the present invention preferably contains inorganic particles used as an inorganic binder during the production, and more preferably contains $\gamma$-alumina particles derived from boehmite.

The honeycomb catalytic converter of the present invention preferably contains inorganic fibers, more preferably alumina fibers.

The honeycomb catalytic converter containing inorganic fibers such as alumina fibers can have better mechanical characteristics.

The inorganic fibers are those having an aspect ratio of 5 or more, and the inorganic particles are those having an aspect ratio of less than 5.

The honeycomb catalytic converter of the present invention preferably has a length to diameter ratio (length/diameter) of 0.5 to 1.1, more preferably 0.6 to 0.8.

In the honeycomb catalytic converter of the present invention, the diameter of the honeycomb catalytic converter is preferably 130 mm or less, more preferably 125 mm or less. The diameter of the honeycomb catalytic converter is also preferably 85 mm or more.

In the honeycomb catalytic converter of the present invention, the length of the honeycomb catalytic converter is preferably 65 to 120 mm, more preferably 70 to 110 mm.

The shape of the honeycomb catalytic converter of the present invention is not limited to a round pillar shape. Examples include a prism, a cylindroid shape, a pillar shape having an end face with a racetrack shape, and a prism with rounded corners (e.g., a triangular pillar shape with rounded corners).

In the honeycomb catalytic converter of the present invention, preferably, all the partition walls have the same thickness. Specifically, the thickness of each partition wall of the honeycomb catalytic converter is preferably 0.10 to 0.25 mm, more preferably 0.10 to 0.15 mm.

In the honeycomb catalytic converter of the present invention, the thickness of the first carrier layer on one side of each partition wall is preferably 0.01 to 0.10 mm, more preferably 0.02 to 0.05 mm.

In the honeycomb catalytic converter of the present invention, the thickness of the second carrier layer on one side of each partition wall is preferably 0.05 to 0.20 mm, more preferably 0.05 to 0.15 mm.

In the honeycomb catalytic converter of the present invention, the shape of the through-holes is not limited to a quadrangular pillar shape. For example, it may be a triangular pillar shape or a hexagonal pillar shape.

In the honeycomb catalytic converter of the present invention, preferably, the density of the through-holes in a cross section perpendicular to the longitudinal direction of the honeycomb catalytic converter is 31 to 155 pcs/cm$^2$.

Preferably, the honeycomb catalytic converter of the present invention has a porosity of 40 to 70%. When the porosity of the honeycomb catalytic converter is in the above range, the honeycomb catalytic converter can exhibit high exhaust gas conversion performance while the strength is maintained.

The porosity of the honeycomb catalytic converter can be measured by a weighing method described below.

(1) The honeycomb catalytic converter is cut in size of 10 cells $\times$ 10 cells $\times$ 10 mm to obtain a measurement sample. The measurement sample is ultrasonically washed with deionized water and acetone, and dried in an oven at 100°C. The measurement sample with a size of 10 cells $\times$ 10 cells $\times$ 10 mm is a sample that is cut out such that the sample includes outermost through-holes and partition walls defining these through-holes and has a longitudinal length of 10 mm, with 10 through-holes aligned longitudinally $\times$ 10 through-holes aligned transversely.

(2) Using a measuring microscope (Measuring Microscope MM-40 available from Nikon, magnification: 100 times), the cross-sectional dimension of the measurement sample is measured, and the volume is determined from a geometric calculation (when the volume cannot be determined from a geometric calculation, the volume is measured by measuring the water-saturated weight and the weight in water).

(3) The weight of the measurement sample based on assumption that the measurement sample is a completely dense body is calculated from the calculated volume and the true density of the measurement sample measured with a pycnometer. A measurement procedure using a pycnometer is as described in (4) below.

(4) The honeycomb fired body is pulverized to prepare 23.6 cc of powder. The powder is dried at 200°C for 8 hours. Subsequently, the true density is measured according to JIS R 1620:1995, using Auto Pycnometer 1320 available from Micromeritics. The evacuation time is 40 minutes.

(5) The actual weight of the measurement sample is measured using an electric balance (HR202i available from A & D).

(6) The porosity of the honeycomb catalytic converter is determined by the following formula.

```
(Porosity of honeycomb catalytic converter) = 100 - (actual
weight of measurement sample/weight of measurement sample
based on assumption that the measurement sample is a
completely dense body) × 100 [%]
```

The honeycomb catalytic converter of the present invention may include a peripheral coat layer on the outer periphery of the honeycomb fired body.

Preferably, the thickness of the peripheral coat layer is 0.1 to 2.0 mm.

In the honeycomb catalytic converter of the present invention, noble metals are supported on the honeycomb structured body.

Examples of the noble metals include Rh supported on each first carrier layer and Pd supported on each second carrier layer.

In the honeycomb catalytic converter of the present invention, the total amount of the noble metals supported is preferably 0.1 to 15 g/L, more preferably 0.5 to 10 g/L.

The term "amount of the noble metals supported" as used herein refers to the weight of the noble metals per apparent volume of the honeycomb catalytic converter. The apparent volume of the honeycomb catalytic converter includes the volume of pores and cells, and it includes the volume of the peripheral coat layer and/or the volume of an adhesive layer.

[Method of producing honeycomb catalytic converter]

Next, a method of producing the honeycomb catalytic converter of the present invention is described.

The method of producing the honeycomb catalytic converter of the present invention may be, for example, a method that includes a supporting step of supporting Pd on a honeycomb fired body produced by the method described below, and a coat layer forming step of forming a coat layer containing Rh and CZ raw materials on a surface of each partition wall.

(Production of honeycomb fired body)

First, a method of producing a honeycomb fired body is described.

The method of producing a honeycomb fired body may be, for example, a method that includes a molding step of molding a raw material paste containing CZ particles and alumina particles into a honeycomb molded body in which multiple through-holes are arranged longitudinally in parallel with one another with a partition wall therebetween, and a firing step of firing the honeycomb molded body to produce a honeycomb fired body.

(Molding step)

In the molding step, first, a raw material paste containing CZ particles and alumina particles is prepared.

The types, average particle sizes, and the like of the CZ particles and the alumina particles have been described in the above section [Honeycomb catalytic converter], so that a detailed description is omitted.

The average particle sizes of the CZ particles and the alumina particles used as raw materials of the honeycomb catalytic converter can be determined by a laser diffraction particle size distribution meter (Mastersizer 2000 available from Malvern Panalytical).

Examples of other raw materials used to prepare the raw material paste include inorganic fibers, inorganic binders, organic binders, forming auxiliaries, and dispersion media.

The inorganic fibers may be made of any material. Examples include alumina, silica, silicon carbide, silica alumina, glass, potassium titanate, and aluminum borate. Two or more of these may be used in combination. Of these, alumina fibers are preferred.

The inorganic fibers preferably have an aspect ratio of 5 to 300, more preferably 10 to 200, still more preferably 10 to 100.

Any inorganic binder may be used. Examples include solids contained in materials such as alumina sol, silica sol, titania sol, sodium silicate, sepiolite, attapulgite, and boehmite. Two or more of these inorganic binders may be used in combination.

Of these inorganic binders, boehmite is preferred. Boehmite is alumina monohydrate with a composition of AlOOH, and has good dispersibility in media such as water. Thus, boehmite is preferably used as an inorganic binder.

Any organic binder may be used. Examples include methyl cellulose, carboxymethyl cellulose, hydroxyethyl cellulose, polyethylene glycol, phenolic resin, and epoxy resin. Two or more of these may be used in combination.

Any pore-forming agent may be used. Examples include acrylic resins, coke, and starch. In the present invention, use of two or more selected from acrylic resins, coke, and starch is preferred.

The pore-forming agent is one that is used to introduce pores into a honeycomb fired body when producing a honeycomb fired body.

Any forming auxiliary may be used. Examples include ethylene glycol, dextrins, fatty acids, fatty acid soaps, and polyalcohols. Two or more of these may be used in combination.

Any dispersion medium may be used. Examples include water, organic solvents such as benzene, and alcohols such as methanol. Two or more of these may be used in combination.

When the CZ particles, alumina particles, alumina fibers, and boehmite are used as the materials of the raw material paste, the proportions of these materials relative to the total solids remaining in the raw material paste after the firing step are preferably as follows: CZ particles: 25 to 75 wt%; alumina particles: 15 to 35 wt%; alumina fibers: 5 to 15 wt%, and boehmite: 5 to 20 wt%.

Preparation of the raw material paste preferably involves mixing/kneading of the raw materials. A device such as a mixer or an attritor may be used for mixing, or a device such as a kneader may be used for kneading.

After a raw material paste is prepared by the above method, the raw material paste is molded into a honeycomb molded body in which multiple through-holes are arranged longitudinally in parallel with one another with a partition wall therebetween.

Specifically, the raw material paste is extrusion-molded into a honeycomb molded body. More specifically, the raw material paste is passed through a die of a specific shape to form a continuous honeycomb molded body having through-holes of a specific shape, and the continuous honeycomb molded body is cut to a specific length, whereby a honeycomb molded body is obtained.

Next, preferably, a dryer such a microwave dryer, a hot-air dryer, a dielectric dryer, a reduced-pressure dryer, a vacuum dryer, or a freeze-dryer is used to dry the honeycomb molded body to produce a honeycomb dried body.

Herein, the honeycomb molded body and the honeycomb dried body before the firing step are also collectively referred to as a "honeycomb molded body".

(Firing step)

In the firing step, the honeycomb molded body is fired to produce a honeycomb fired body. In this step, the honeycomb molded body is degreased and fired. Thus, the step can also be referred to as a "degreasing/firing step", but is referred to as a "firing step" for the purpose of convenience.

The temperature in the firing step is preferably 800°C to 1300°C, more preferably 900°C to 1200°C. The duration of the firing step is preferably 1 to 24 hours, more preferably 3 to 18 hours. The atmosphere of the firing step is not limited, but an atmosphere with an oxygen concentration of 1 to 20% is preferred.

The honeycomb fired body can be produced by the above steps.

Subsequently, the supporting step of supporting Pd on the surface of each partition wall of the honeycomb fired body is described.

(Supporting step)

In the supporting step, Pd is preferentially supported on the surface of each partition wall of the honeycomb fired body to form a second carrier layer.

For example, Pd is preferentially supported on the surface of each partition wall by a method that includes immersing the honeycomb fired body in a Pd-containing solution which is easily adsorbed onto the surface of the partition wall, removing the honeycomb fired body from the solution, and heating or drying the honeycomb fired body.

Example of the Pd-containing solution which is easily adsorbed onto the surface of each partition wall of the honey fired body includes a solution containing a Pd complex, and the examples of the Pd complex include dinitro diammine palladium ($[Pd(NH_3)_2(NO_2)_2]$) and tetraammine palladium dichloride ($[Pd(NH_3)_4]Cl_2$). Each of these complexes can be used in the form of a nitric acid solution or an aqueous solution.

Here, the pH of the above solution is adjusted 1.5 to 5.0 to facilitate adsorption of Pd onto the surface of the partition wall.

The pH of the solution can be adjusted by adding a pH adjuster. The pH adjuster is preferably free of halogens such as fluorine, chlorine, and bromine, and sulfur. Examples include nitric acid and oxalic acid.

Subsequently, a description is given on the coat layer forming step of forming, on the second carrier layer, a coat layer including Rh and CZ, which later defines the first carrier layer.

(Coat layer forming step)

First, a slurry for forming a coat layer, which is used as a raw material of the coat layer, is prepared.

The slurry for forming a coat layer is obtained by mixing CZ particles, alumina particles, and a Rh-containing material with a solvent.

The Rh-containing material may be a dispersion of Rh particles or a solution of a Rh complex or a Rh salt.

The order of mixing various raw materials is not limited. In one method, CZ particles, alumina particles, a Rh-containing material, and a solvent are mixed together at once. In another method, CZ particles and a Rh-containing material are first mixed together to obtain Rh-carrying CZ particles, and subsequently, the Rh-carrying CZ particles, alumina particles, and a solvent are mixed together. In yet another method, alumina particles and a Rh-containing material are first mixed together to obtain a Rh-carrying alumina particles, and subsequently, the Rh-carrying alumina particles, CZ particles, and a solvent are mixed together.

Examples of other raw materials used to prepare the slurry for forming a coat layer include inorganic binders and dispersion media.

Such other raw materials are preferably those used in the raw material paste to produce a honeycomb molded body.

The honeycomb fired body in which Pd is supported on the surface of each partition wall is immersed in the slurry for forming a coat layer, and removed from the slurry, followed by drying and firing, whereby the honeycomb catalytic converter of the present invention can be obtained in which the coat layer containing Rh is formed on the surface of each partition wall constituting the honeycomb fired body carrying Pd.

The total amount of the noble metals supported in the coat layer forming step is preferably adjusted to 0.1 to 15 g/L, more preferably 0.5 to 10 g/L.

(Other steps)

When a peripheral coat layer is formed on the outer periphery of the honeycomb fired body, the peripheral coat layer can be formed by applying a peripheral coat layer paste to the outer periphery of the honeycomb fired body excluding both end faces thereof, and then solidifying the peripheral coat layer paste by drying. The peripheral coat layer paste may have the same composition as that of the raw material paste. Preferably, the step of forming a peripheral coat layer is performed after the coat layer forming step.

When a honeycomb structured body in which multiple honeycomb fired bodies are combined together with an adhesive layer therebetween is used, the honeycomb structured body can be produced by applying an adhesive layer paste to the outer periphery of each honeycomb fired body excluding both end faces thereof, combining the honeycomb fired bodies, and solidifying the adhesive layer paste by drying. The adhesive layer paste may have the same composition as that of the raw material paste.

EXAMPLES

Examples that more specifically disclose the present invention are described below. The present invention is not limited to these examples.

[Production of honeycomb catalytic converter]

(Example 1)

The following materials were mixed/kneaded to prepare a raw material paste: CZ particles (average particle size: 2 $\mu$m) (26.4 wt%), $\theta$-alumina particles (average particle size: 2 $\mu$m) (13.2 wt%), alumina fibers (average fiber diameter: 3 $\mu$m; average fiber length: 60 $\mu$m) (5.3 wt%), boehmite as an inorganic binder (11.3 wt%), methyl cellulose as an organic binder (5.3 wt%), acrylic resin as a pore-forming agent (2.1 wt%), coke also as a pore-forming agent (2.6 wt%), polyoxyethylene oleyl ether (surfactant) as a forming auxiliary (4.2 wt%), and deionized water (29.6 wt%) .

Using an extruder, the raw material paste was extrusion-molded into a round pillar-shaped honeycomb molded body. Then, using a reduced-pressure microwave dryer, the honeycomb molded body was dried at an output of 1.74 kW under a reduced pressure of 6.7 kPa for 12 minutes, and then degreased/fired at 1100°C for 10 hours, whereby a honeycomb fired body was produced. The honeycomb fired body had a round pillar shape with a diameter of 103 mm and a length of 105 mm in which the density of the through-holes was 77.5 pcs/cm$^2$ (500 cpsi) and the thickness of each partition wall was 0.076 mm (3 mil).

(Supporting step)

A dinitro diammine palladium nitrate solution ([Pd(NH$_3$)$_2$(NO$_2$)$_2$]HNO$_3$, palladium concentration: 100 g/L) was prepared, and nitric acid was added to the solution to adjust the pH of the solution to 2.3.

The honeycomb fired body was immersed and kept in the Pd solution for 24 hours. Subsequently, the honeycomb fired body was removed from the Pd solution, dried at 110°C for 2 hours, and fired at 500°C for 1 hour in a nitrogen atmosphere, whereby Pd was preferentially supported on the surface of each partition wall constituting the honeycomb fired body.

The amount of Pd was 1.2 g/L per apparent volume of the honeycomb fired body.

(Preparation of slurry for forming coat layer)

CZ particles (average particle diameter: 2 $\mu$m) were added and mixed with a rhodium nitrate solution, and the solvent was dried, followed by firing at 500°C for 1 hour, whereby Rh-carrying CZ particles in which Rh was supported on the CZ particles were obtained. Subsequently, the Rh-carrying CZ particles (100 parts by weight) were mixed with ion-exchanged water (400 parts by weight), whereby a slurry for forming a coat layer was prepared.

(Formation of coat layer)

The Pd-carrying honeycomb fired body was immersed in the slurry for forming a coat layer. Then, the Pd-carrying honeycomb fired body was removed from the slurry for forming a coat layer, and excess slurry attached to the Pd-carrying honeycomb fired body was blown off by a blower. Subsequently, the Pd-carrying honeycomb fired body was dried at 80°C for 24 hours, and fired at 500°C for 1 hour, whereby a honeycomb catalytic converter according to Example 1 in which a coat layer containing a noble metal was formed on the surface of each partition wall was obtained.

The amount of Rh supported was 0.4 g/L per apparent volume of the honeycomb catalytic converter.

(Comparative Example 1)

A honeycomb catalytic converter according to Comparative Example 1 was obtained as in Example 1, except that the solution used in the supporting step was changed to a palladium nitrate solution.

(Observation of noble metal distribution in second carrier layer)

Each of the honeycomb fired bodies (the honeycomb fired body carrying Pd) used to produce the catalytic converters according to Example 1 and Comparative Example 1 was cut in a direction perpendicular to the longitudinal direction, and partition walls exposed at a cut surface (i.e., the second carrier layers) were observed by EPMA to obtain an elemental mapping image.

Specifically, the honeycomb fired body carrying Pd was formed to a size of 3 cells × 3 cells × 10 mm, and solidified with an epoxy resin, followed by mirror polishing. Then, platinum was deposited on a surface to be observed, whereby a sample for observation was obtained. A device JXA8500F available from JOEL Ltd. was used. An elemental distribution of Pd was mapped at an acceleration voltage of 25 kV and an irradiation current of $4 \times 10^{-8}$ A with a beam diameter of 10 μm and an irradiation time of 40 ms.

The sample for observation with a size of 3 cells × 3 cells × 10 mm refers to a sample that is cut out such that the sample includes outermost through-holes and partition walls defining these through-holes and has a longitudinal length of 10 mm, with 3 through-holes aligned longitudinally × 3 through-holes aligned transversely.

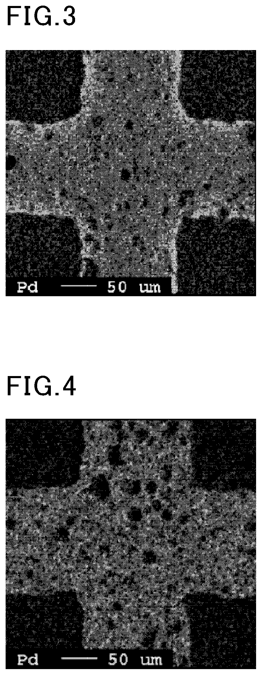

FIG. 3 is an EPMA image of the second carrier layers constituting the honeycomb catalytic converter according to Example 1. FIG. 4 is an EPMA image of the second carrier layers constituting of the honeycomb catalytic converter according to Comparative Example 1. FIG. 3 shows that in each second carrier layer constituting the honeycomb catalytic converter according to Example 1, the Pd concentration on the first carrier layer side is higher than the Pd concentration in the center (i.e., the Pd is concentrated on the first carrier layer side). In contrast, FIG. 4 shows that in the each second carrier layer constituting the honeycomb catalytic converter according to Comparative Example 1, Pd is substantially uniformly supported on the second carrier layer.

(Measurement of exhaust gas conversion performance)

Each of the honeycomb catalytic converters according to Example 1 and Comparative Example 1 was set in a V6-3.5L engine, and the temperature when the HC concentration ((HC inflow - HC outflow)/(HC inflow) × 100) was 50% from the start of the stoichiometric engine was measured to evaluate the warm-up performance of each honeycomb catalytic converter.

The lower the temperature when the HC concentration was 50%, the higher the warm-up performance. When the temperature was lower than 280°C, the honeycomb catalytic converter was determined as having sufficient exhaust gas conversion performance. Table 1 shows the results.

Table 1

| | First carrier layer | | | Second carrier layer | | | | Temperature at HC concentration of 50% [°C] |
|---|---|---|---|---|---|---|---|---|
| | Type of noble metal | Concnetration [g/L] | Thickness [$\mu$m] | Type of noble metal | Location | Concentration [g/L] | Thickness [$\mu$m] | |
| Example 1 | Rh | 0.4 | 25 | Pd | Concentrated on first carrier layer side | 1.2 | 76 | 270 |
| Comparative Example 1 | Rh | 0.4 | 25 | Pd | Not concntrated on first carrier layer side | 1.2 | 76 | 300 |

EP 3 689 455 A1

The results in Table 1 show that the honeycomb catalytic converter according to Example 1 has excellent exhaust gas conversion performance.

REFERENCE SIGNS LIST

| | |
|---|---|
| 10 | honeycomb catalytic converter |
| 11 | honeycomb structured body |
| 12 | through-hole |
| 13 | partition wall |
| 13a | first carrier layer |
| 13b | second carrier layer |
| 14a | noble metal (rhodium) |
| 14b | noble metal (palladium) |

**Claims**

1. A honeycomb catalytic converter comprising:

   a honeycomb structured body in which multiple through-holes are arranged longitudinally in parallel with one another with a partition wall therebetween; and
   a noble metal supported on the honeycomb structured body,
   wherein the honeycomb structured body contains a ceria-zirconia complex oxide and alumina,
   each partition wall includes a first carrier layer defining a surface layer of the partition wall and carrying Rh, and
   a second carrier layer located more inwardly of the partition wall than the first carrier layer and carrying Pd, and
   the Pd concentration on the first carrier layer side of each second carrier layer is higher than the Pd concentration in the center of the second carrier layer.

2. The honeycomb catalytic converter according to claim 1,
   wherein the honeycomb structured body further contains an inorganic binder.

3. The honeycomb catalytic converter according to claim 1 or 2,
   wherein the first carrier layer is a coat layer containing a ceria-zirconia complex oxide, alumina, and Rh, and the second carrier layer is an extrudate containing ceria-zirconia complex oxide particles and alumina particles.

4. The honeycomb catalytic converter according to any one of claims 1 to 3,
   wherein each partition wall has a thickness of 0.10 to 0.25 mm.

5. The honeycomb catalytic converter according to any one of claims 1 to 4,
   wherein each second carrier layer has a thickness of 0.05 to 0.20 mm.

6. The honeycomb catalytic converter according to any one of claims 1 to 5,
   wherein the honeycomb catalytic converter has a length to diameter ratio (length/diameter) of 0.5 to 1.1.

7. The honeycomb catalytic converter according to any one of claims 1 to 6,
   wherein the honeycomb catalytic converter has a diameter of 130 mm or less.

8. The honeycomb catalytic converter according to any one of claims 1 to 7,
   wherein the honeycomb catalytic converter contains 25 to 75 wt% ceria-zirconia complex oxide.

FIG.1

10

11

13

12

FIG.2

t

t

12

13a

13b

13

14a

14b

FIG.3

FIG.4

<div align="center">

**INTERNATIONAL SEARCH REPORT**

</div>

| | International application No. |
|---|---|
| | PCT/JP2018/035837 |

**A. CLASSIFICATION OF SUBJECT MATTER**
Int.Cl.  B01J23/63(2006.01)i, B01D53/94(2006.01)i, B01J35/04(2006.01)i, F01N3/10(2006.01)i, F01N3/28(2006.01)i
According to International Patent Classification (IPC) or to both national classification and IPC

**B. FIELDS SEARCHED**

Minimum documentation searched (classification system followed by classification symbols)
Int.Cl. B01J23/63, B01D53/94, B01J35/04, F01N3/10, F01N3/28

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-39069 A (DENSO CORP.) 23 February 2017, paragraphs [0026]–[0030] & US 2018/0229183 A1, paragraphs [0032]–[0036] & WO 2017/029971 A1 & CN 107921417 A | 1–8 |
| Y | JP 2009-255032 A (IBIDEN CO., LTD.) 05 November 2009, paragraphs [0039], [0040] (Family: none) | 1–8 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 December 2018 (10.12.2018) | 18 December 2018 (18.12.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017039069 A